# EUROPEAN PATENT APPLICATION

(11) **EP 3 829 228 A1**
(43) Date of publication of application: **02.06.2021**
(21) Application number: 19839956.0
(22) Date of filing: 16.07.2019
(51) Int. Cl.: H04W 52/02

(54) **METHOD AND APPARATUS FOR TRANSMITTING SIGNAL, AND COMPUTER-READABLE STORAGE MEDIUM**

(30) Priority: 25.07.2018 CN 201810823829
(71) Applicant: Xi'an Zhongxing New Software Co., Ltd., Shaanxi 710114 (CN)
(72) Inventor: HU, Kaikai, Shenzhen, Guangdong 518057 (CN)
(74) Representative: Petraz, Gilberto Luigi
(86) International application number: PCT/CN2019/096227
(87) International publication number: WO 2020/020020

(57) **Abstract**

The present application discloses a method and an apparatus for transmitting a signal, and a computer-readable storage medium. The transmission method for transmitting a signal comprises: determining a strength of a transmit power of a signal; determining, according to the strength of the transmit power, a path corresponding to the strength of the transmit power; and transmitting the signal by means of the path corresponding to the strength of the transmit power.

## Description

### Cross-reference to Related Applications

This application claims the priority of Chinese patent application CN 201810823829.X filed with the China National Intellectual Property Administration on July 25, 2018, the entirety of which is incorporated herein by reference.

### Field of the Invention

Embodiments of the present application relate to the technical field of communications, and in particular, to a method for transmitting a signal, an apparatus for transmitting a signal, and a computer-readable storage medium.

### Background of the Invention

With the continuous development of society, wireless terminals are becoming more and more intelligent, and humans rely on the terminals more and more. However, since the terminals have a feature of mobility and it is inconvenient to charge the terminals, there is a high requirement for the standby time of the terminals.

For commercial terminals, methods such as increasing the battery capacity are mostly used to increase the standby time of the terminals. However, increasing the battery capacity also means an increase in the overall cost of the terminals, and low-end products are very sensitive to cost. High power user equipment (HPUE) has become a hot topic. For time division duplexing (TDD), a low insertion loss filter is urgently needed to increase the transmission power. Under the transmitter architecture in related technologies, in order to achieve relatively high power output, it is necessary to find ways to make the insertion loss of devices such as a filter and a switch as less as possible. In actual use of terminals, the same transmission path is used when a signal is transmitted, and about 2db of power is lost when the signal passes through the filter, which causes relatively high power consumption.

### Summary of the Invention

Embodiments of the present application provide a method for transmitting a signal, an apparatus for transmitting a signal, and a computer-readable storage medium, which can determine a corresponding path according to different strengths of transmit powers of signals so as to reduce power consumption.

The present application provides a method for transmitting a signal. The method includes steps of:
determining a strength of a transmit power of a signal;
determining a path corresponding to the strength of the transmit power according to the strength of the transmit power; and
transmitting the signal through the path corresponding to the strength of the transmit power.

The present application further provides an apparatus for transmitting a signal. The apparatus includes: a processor, a power amplifier (PA) connected to the processor, a path switching switch connected to the processor, a filter, and an antenna switch module (ASM) connected to the filter. Herein,
the processor is configured to determine a strength of a transmit power of a signal, and to determine a path corresponding to the strength of the transmit power according to the strength of the transmit power; and
the processor 501 is further configured to control the path switching switch to connect the PA and the ASM according to the path corresponding to the strength of the transmit power determined so as to form a first path, through which the signal is transmitted; or the processor 501 is further configured to control the path switching switch to connect the PA and the filter according to the path corresponding to the strength of the transmit power determined, and the PA, the filter, the path switching switch, and the ASM form a second path, through which the signal is transmitted.

The present application further provides an apparatus for transmitting a signal, including a processor and a memory which is configured to store computer programs that can be run on the processor. Herein, the processor is configured to, when running the computer programs, implement the method according to any one of the above solutions.

The present application further provides a computer-readable storage medium, which stores computer programs thereon. The computer programs, when executed by a processor, implement the method according to any one of the above solutions.

### Brief Description of the Drawings

Fig. 1 is a flowchart of a method for transmitting a signal in Embodiment One of the present application;
Fig. 2 is a schematic diagram of a structure of a TDD transmission path in related technologies;
Fig. 3 is a schematic diagram of a structure of a TDD transmission path in Embodiment Two of the present application;
Fig. 4 is a flowchart of a method for transmitting a signal in Embodiment Two of the present application;
Fig. 5 is a schematic diagram of a structure of an apparatus for transmitting a signal in Embodiment Three of the present application; and
Fig. 6 is a schematic diagram of a structure of an apparatus for transmitting a signal in Embodiment Four of the present application.

### Detailed Description of the Embodiments

The present application is illustrated below with reference to drawings in conjunction with specific embodiments.

### Embodiment One

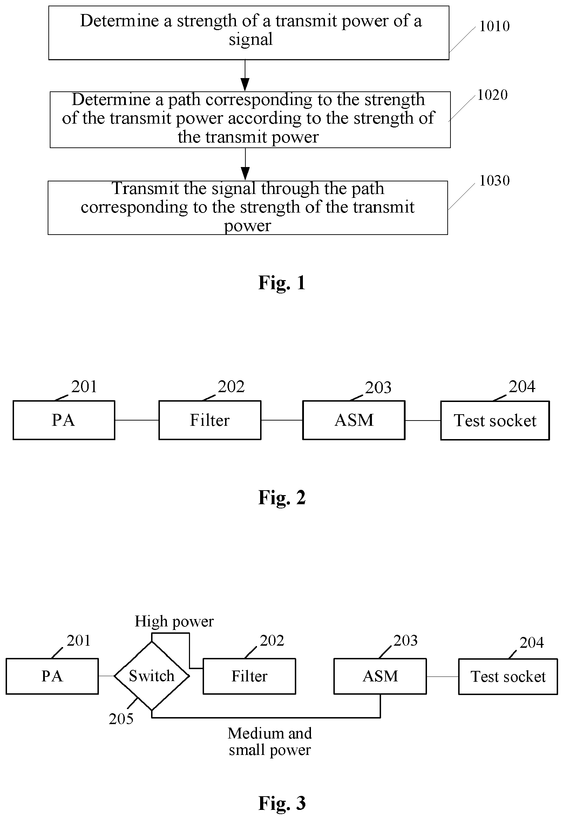

Fig.1 is a flowchart of a method for transmitting a signal in Embodiment One of the present application. As shown in Fig. 1, the method includes the following steps.

At step 1010, a strength of a transmit power of a signal is determined.

In actual use, connection between a terminal and a base station is established, and the terminal communicates with other terminals via a network. The terminal may receive a signal sent by the base station or by other devices, and may also send a signal to the base station or to other devices. Therefore, the strength of the transmit power when the terminal sends a signal may be determined according to a received signal sent by the base station. For example, it is determined that the strength of the transmit power of a mobile terminal is 22dbm.

It should be noted that, there are multiple methods for determining the strength of the transmit power, and the present application does not limit the method for determining the strength of the transmit power of the signal.

In an embodiment, before determining a strength of a transmit power of a signal, the method further includes a step of: determining whether a current working mode is a time division duplexing (TDD) working mode. The step of determining a strength of a transmit power of a signal includes a step of: determining the strength of the transmit power of the signal in a case that the current working mode is the TDD working mode.

Before detecting the strength of the transmit power, it is required to determine whether the current working mode is the TDD working mode. If the current working mode is the TDD working mode, the strength of the transmit power is detected; and if the current working mode is a frequency division duplexing (FDD) mode, communication is performed through a conventional transmission path according to the FDD mode.

The terminal receives the signal sent by the base station. If a TDD signal received is strong and the number of registrations in a cell is not saturated, the terminal is registered in the TDD cell and works in the TDD working mode.

In actual use, after it is determined that the current working mode is the TDD working mode, the transmit power of the terminal may be determined according to indexes associated with quality of a received signal, such as a strength of the TDD signal sent by the base station. For example, if the strength of the TDD signal received is -90 dbm, the strength of the transmit power of the terminal may be 9 dbm; and if the strength of the TDD signal received is -100 dbm, the strength of the transmit power of the terminal may be 19 dbm.

It should be noted that the transmit power of the terminal is the power of the signal sent by the terminal.

At step 1020, a path corresponding to the strength of the transmit power is determined according to the strength of the transmit power.

The path corresponding to the strength of the transmit power is determined according to a comparison between the strength of the transmit power obtained by detecting and a set threshold value. For example, if it is obtained that the transmit power is a medium and low power or is a high power by comparing the strength of the transmit power with the set threshold value, the path corresponding to the strength of the transmit power is as follows: the medium and low power corresponds to a first path, and the high power corresponds to a second path. Insertion loss to a signal sent by a PA in the mobile terminal in the first path is different from that in the second path.

In an embodiment, the step of determining a path corresponding to the strength of the transmit power according to the strength of the transmit power includes a step of: determining that a first path is the path corresponding to the strength of the transmit power in a case that it is determined that the strength of the transmit power is less than or equal to a set threshold value, the first path including a PA and an ASM.

Herein, a set determination strategy is based on the set threshold value. The strength of the transmit power obtained by detecting is compared with the set threshold value. If the strength of the transmit power is less than or equal to the set threshold value, it is indicated that the signal is a medium and low power signal, and it is determined that the first path is the path for transmitting the medium and low power signal.

The first path includes a PA and an ASM. The first path does not include a filter, and is used for communication of the medium and low power signal.

In an embodiment, the step of determining a path corresponding to the strength of the transmit power according to the strength of the transmit power includes a step of: determining that a second path is the path corresponding to the strength of the transmit power in a case that it is determined that the strength of the transmit power is greater than a set threshold value, the second path including a PA, a filter, and an ASM.

The strength of the transmit power obtained by detecting is compared with the set threshold value. If the strength of the transmit power is greater than the set threshold value, it is indicated that the signal is a high power signal, and it is determined that the second path is the path for transmitting the high power signal.

The second path includes a PA, a filter, and an ASM. The second path includes the filter, and is used for communication of the high power signal.

When the strength of the transmit power changes from a value greater than the set threshold value to a value less than or equal to the set threshold value, a step of performing communication through the path corresponding to the strength of the transmit power includes steps of: making a switching from the second path currently used for performing communication to the first path; and performing communication through the first path.

In the case that the strength of the transmit power is greater than the set threshold value, communication is performed through the second path. In a case that the strength of the transmit power changes from a value greater than the set threshold value to a value less than or equal to the set threshold value, the path corresponding the strength of the transmit power is changed. That is, a switching is made from the second path currently used for performing communication to the first path, and communication is performed through the first path.

At step 1030, the signal is transmitted through the path corresponding to the strength of the transmit power.

After the corresponding path is determined according to the strength of the transmit power, the path corresponding to the strength of the transmit power is used for transmitting the signal. For example, when it is determined that the transmit power is the medium and low power, the first path corresponding to the strength of the transmit power is used for transmitting the signal; and when it is determined that the transmit power is the high power, the second path corresponding to the strength of the transmit power is used for transmitting the signal.

In an embodiment, the step of transmitting the signal through the path corresponding to the strength of the transmit power includes steps of: connecting the PA and the ASM by a path switching switch to form the first path; and transmitting the signal through the first path.

Herein, the path switching switch may include devices having a switching function, such as a single-pole double-throw switch and a relay. In the case that it is determined that the strength of the transmit power is less than or equal to the set threshold value, the PA and the ASM are connected by the path switching switch to form the first path; and the signal is transmitted through the first path.

In an embodiment, the step of transmitting the signal through the path corresponding to the strength of the transmit power includes steps of: connecting the PA and the filter by a path switching switch and connecting the path switching switch and the ASM by the filter to form the second path; and transmitting the signal through the second path.

In the case that the strength of the transmit power is greater than the set threshold value, the PA and the filter are connected by the path switching switch, and the path switching switch and the ASM are connected by the filter, to form the second path; and the signal is transmitted through the second path.

In the present embodiment, a strength of a transmit power of a signal is determined; a path corresponding to the strength of the transmit power is determined according to the strength of the transmit power; and the signal is transmitted through the path corresponding to the strength of the transmit power. In this way, a corresponding path can be determined according to different strengths of transmit powers of signals, so as to reduce power consumption, improve the capability of the battery to continuously supply power, and enhance user experience.

### Embodiment Two

In the present embodiment, a method for transmitting a signal provided in embodiments of the present disclosure is illustrated by taking the path switching switch being the single-pole double-throw switch as an example.

In related technologies, a conventional circuit for TDD power transmission is shown in Fig. 2, and the circuit includes: a PA 201, a filter 202, an ASM 203, and a test socket 204. Herein, the filter 202 may be a TDD filter.

In actual use of the terminal, there is 2db of insertion loss at the filter. Therefore, no matter how high the transmit power of the signal is, 2db of power is lost when the signal passes through the filter. Here, the filter functions to filter out some out-of-band spurs caused by nonlinearity of a PA, when the PA transmits a high power signal. However, when the PA transmits a medium and low power signal, a degree of linearity is very good, and there is no need for the signal to pass though the filter for filtration.

In the present embodiment, a method for transmitting a signal is provided with respect to the case that the mobile terminal in the TDD mode transmits a medium and low power signal. In the present embodiment, when the mobile terminal transmits a power signal, in a case that the degree of linearity of the PA is good, the signal may directly skip the filter, so as to reduce a transmit power of the PA and finally reducethe power consumption.

In the method for transmitting a signal provided in the present embodiment, a circuit for TDD power transmission is shown in Fig. 3. A switch 205 (i.e., the path switching switch) is provided between the PA 201 and the filter 202. Compared with Fig. 2, it is only required to add the switch 205 on a transmission path. The switch 205 can be a single-pole double-throw switch. The switch 205 mainly has the following functions. (1) In a case of TDD high power transmission, a manner of a path plus the filter is used, and the filter 202 is used to filter out some out-of-band spurs of the signal; and (2) in a case of TDD medium and low power transmission, the signal is transmitted by skipping the filter.

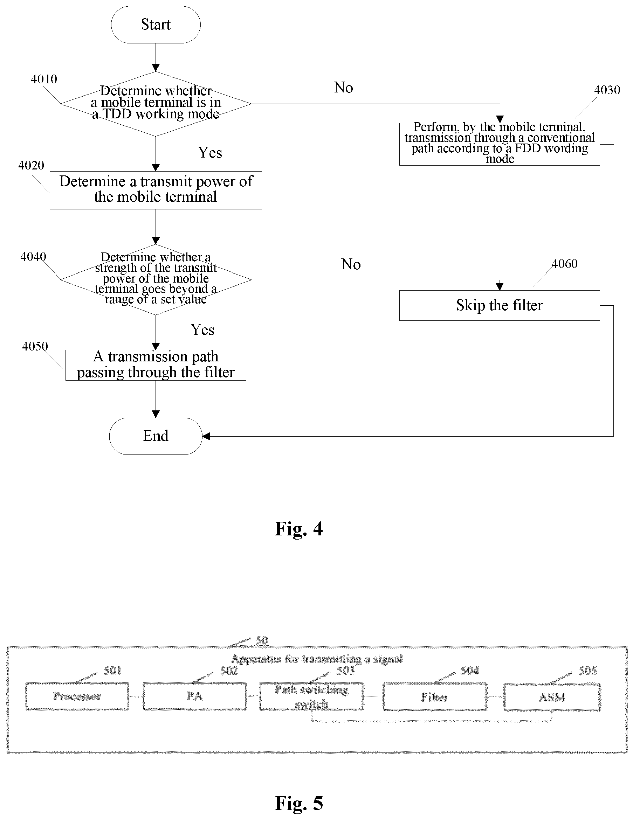

A working process of the method for transmitting a signal provided in the present embodiment is shown in Fig. 4.

At step 4010, it is determined whether a mobile terminal works in a TDD working mode.

It is determined, by the mobile terminal, whether the mobile terminal works in the TDD working mode based on a current signal environment. In response to a determination result that the mobile terminal works in the TDD working mode, step 4020 is performed; and in response to a determination result that the mobile terminal does not work in the TDD working mode, step 4030 is performed.

At step 4020, a transmit power of the mobile terminal is determined.

The transmit power of the mobile terminal is determined, by the mobile terminal, according to indexes associated with quality of a received signal, such as a strength of a TDD signal received from the base station.

At step 4030, the mobile terminal performs transmission through a conventional path according to a FDD wording mode.

At step 4040, it is determined whether a strength of the transmit power of the mobile terminal goes beyond a range of a set value. In response to a determination result that the strength of the transmit power of the mobile terminal goes beyond the range of the set value, step 4050 is performed; and in response to a determination result that the strength of the transmit power of the mobile terminal does not go beyond the range of the set value, step 4060 is performed.

At step 4050, a signal is transmitted through the filter.

Communication is performed through a second path. Herein, the second path is formed by a PA, a path switching switch, a filter, and an ASM.

At step 4060, a signal is transmitted by skipping the filter.

Communication is performed through a first path. Herein, the first path is formed by a PA, a path switching switch, and an ASM.

In the present embodiment, the mobile terminal is required to work in a TDD working mode, and the mobile terminal transmits a medium and low power. By reducing insertion loss on a transmission path, a transmit power of the PA is reduced when the same power is output, so as to reduce power consumption, improve the capability of the battery to continuously supply power, and enhance user experience.

### Embodiment Three

The present embodiment provides an apparatus for transmitting a signal. As shown in Fig. 5, an apparatus 50 for transmitting a signal includes: a processor 501, a PA 502, a path switching switch 503, a filter 504, and an ASM 505. Herein, the processor 501 is configured to determine a strength of a transmit power of a signal, and to determine a path corresponding to the strength of the transmit power according to the strength of the transmit power. The processor 501 is further configured to control the path switching switch 503 to connect the PA 502 and the ASM 505 according to the path corresponding to the strength of the transmit power determined, so as to form a first path, or to control the path switching switch 503 to connect the PA 502, the ASM 505, and the filter 504, so as to form a second path.

In an embodiment, the processor 501 is configured to control the path switching switch 503 to connect the PA 502 and the ASM 505 according to the path corresponding to the strength of the transmit power determined so as to form a first path through the following manner: in a case that it is determined that the strength of the transmit power is less than or equal to a set threshold value, it is determined that the first path is the path corresponding to the strength of the transmit power, and the path switching switch 503 is controlled to connect the PA 502 and the ASM 505, so as to form the first path.

In an embodiment, the processor 501 is configured to control the path switching switch 503 to connect the PA 502, the ASM 505, and the filter 504 according to the path corresponding to the strength of the transmit power determined so as to form a second path through the following manner: in a case that it is determined that the strength of the transmit power is greater than a set threshold value, it is determined that the second path is the path corresponding to the strength of the transmit power, and the path switching switch 503 is controlled to connect the PA 502, the ASM 505, and the filter 504, so as to form the second path.

In an embodiment, before determining a strength of a transmit power of a signal, the processor 501 is further configured to: determine whether a current working mode is a time division duplexing (TDD) working mode. Correspondingly, the processor 501 is configured to determine the strength of the transmit power of the signal through the following manner. In a case that the current working mode is the TDD working mode, the strength of the transmit power corresponding to the signal is determined.

It should be noted that, when the apparatus for transmitting a signal provided in the above embodiment transmits a signal, the above division of multiple program modules is only an example. In actual use, the above distribution of processing may be completed by different program modules. That is, an internal structure of the apparatus is divided into different program modules, so as to complete all of the processing described above or part of the processing described above. In addition, the apparatus for transmitting a signal provided in the above embodiment and the embodiments of the methods for transmitting a signal belong to the same idea. Details of the specific implementation process can be seen in the method embodiments, and are not repeated here.

### Embodiment Four

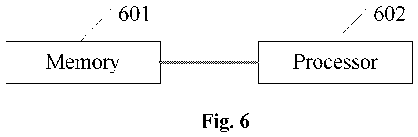

Based on the above embodiments, the present embodiment provides an apparatus for transmitting a signal. As shown in Fig. 6, the apparatus includes a processor 602 and a memory 601 which is configured to store computer programs that can be run on the processor 602. Herein, the processor 602 is configured to, when running the computer programs, implement steps of: determining a strength of a transmit power of a signal; determining a path corresponding to the strength of the transmit power according to the strength of the transmit power; and transmitting the signal through the path corresponding to the strength of the transmit power.

The methods disclosed in the above embodiments of the present application may be applied in the processor 602, or may be implemented by the processor 602. The processor 602 may be an integrated circuit chip, and has a capability of signal processing. In the implementation process, multiple steps of the above methods may be completed by an integrated logic circuit in the form of hardware in the processor 602 or instructions in the form of software. The above processor 602 may be a general-purpose processor, a digital signal processor (DSP), or other programmable logic device, a discrete gate or transistor logic device, a discrete hardware component etc. The processor 602 may implement or perform multiple methods, steps or logic blocks disclosed in embodiments of the present application. The general-purpose processor may be a microprocessor or any conventional processor. Steps of the methods disclosed in embodiments of the present application may be directly embodied as being implemented and completed by a hardware decoding processor, or embodied as being implemented and completed by a combination of hardware in the hardware decoding processor in combination with a software module. The software module may be located in a storage medium, and the storage medium is located in the memory 601. The processor 602 reads information in the memory 601, and completes steps of the above methods in combination with hardware.

It can be understood that, the memory (memory 601) in the present embodiment may be a volatile memory or a nonvolatile memory, or may also include both the volatile memory and the nonvolatile memory. Herein, the nonvolatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disc, or a compact disc read-only memory (CD-ROM). The magnetic surface memory may be a magnetic disk storage or a magnetic tape storage. The volatile memory may be a random access memory (RAM), and the RAM is used for external cache. By way of exemplary, rather than limitative, illustration, many forms of RAM may be used, for example, a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), and a direct rambus random access memory (DRRAM). The memory described in the present embodiment is intended to include, but is not limited to, these memories and any other suitable type of the memory.

It should be noted that, description for items in the above embodiment of the terminal is similar to description of the methods, has the same beneficial effect as the method embodiments, and thus is not repeated. For technical details not disclosed in the embodiment of the terminal in the present application, a person skilled in the art can understood by referring to the description of the method embodiments in the present application, and the technical details are not repeated herein in order to save space.

### Embodiment Five

In an exemplary embodiment, the present embodiment further provides a computer storage medium, specifically a computer-readable storage medium. The computer-readable storage medium includes, for example, a memory 601 for storing computer programs, and the computer programs may be processed by a processor 602 to complete steps of the above methods. The computer-readable storage medium may be a memory, such as a FRAM, a ROM, a PROM, an EPROM, an EEPROM, a flash memory, a magnetic surface memory, an optical disc, or a CD-ROM.

The present embodiment further provides a computer-readable storage medium, on which computer programs are stored. The computer programs implement, when processed by the processor, steps of: determining a strength of a transmit power of a signal; determining a path corresponding to the strength of the transmit power according to the strength of the transmit power; and transmitting the signal through the path corresponding to the strength of the transmit power.

It should be noted that, description for items in the above embodiment of the computer medium is similar to description of the methods, has the same beneficial effect as the method embodiments, and thus is not repeated. For technical details not disclosed in the embodiment of the storage medium in the present application, a person skilled in the art can understood by referring to the description of the method embodiments in the present application, and the technical details are not repeated herein in order to save space.

## Claims

1. A method for transmitting a signal, comprising steps of:
determining a strength of a transmit power of a signal;
determining a path corresponding to the strength of the transmit power according to the strength of the transmit power; and
transmitting the signal through the path corresponding to the strength of the transmit power.

2. The method according to claim 1, wherein the step of determining a path corresponding to the strength of the transmit power according to the strength of the transmit power comprises a step of:
determining that a first path is the path corresponding to the strength of the transmit power in a case that the strength of the transmit power is less than or equal to a set threshold value, wherein the first path comprises a power amplifier called PA and an antenna switch module called ASM.

3. The method according to claim 2, wherein the step of transmitting the signal through the path corresponding to the strength of the transmit power comprises steps of:
connecting the PA and the ASM by a path switching switch to form the first path; and
transmitting the signal through the first path.

4. The method according to claim 1, wherein the step of determining a path corresponding to the strength of the transmit power according to the strength of the transmit power comprises a step of:
determining that a second path is the path corresponding to the strength of the transmit power in a case that the strength of the transmit power is greater than a set threshold value, wherein the second path comprises a PA, a filter, and an ASM.

5. The method according to claim 4, wherein the step of transmitting the signal through the path corresponding to the strength of the transmit power comprises steps of:
connecting the PA and the filter by a path switching switch and connecting the path switching switch and the ASM by the filter to form the second path; and
transmitting the signal through the second path.

6. The method according to claim 1, wherein before the step of determining a strength of a transmit power of a signal, the method further comprises a step of:
determining whether a current working mode is a time division duplexing working mode, called TDD working mode; and
the step of determining a strength of a transmit power of a signal comprises a step of: determining the strength of the transmit power of the signal in a case that the current working mode is the TDD working mode.

7. An apparatus for transmitting a signal, comprising: a processor (501), a power amplifier (502), called PA (502) connected to the processor, a path switching switch (503) connected to the processor (501), a filter (504), and an antenna switch module (505), called ASM (505), connected to the filter, wherein
the processor (501) is configured to determine a strength of a transmit power of a signal, and to determine a path corresponding to the strength of the transmit power according to the strength of the transmit power; and
the processor (501) is further configured to control the path switching switch (503) to connect the PA (502) and the ASM (505) according to the path corresponding to the strength of the transmit power determined so as to form a first path, through which the signal is transmitted; or the processor (501) is further configured to control the path switching switch (503) to connect the PA (502) and the filter (504) according to the path corresponding to the strength of the transmit power determined, and the PA (502), the path switching switch (503), the filter (504), and the ASM (505) form a second path, through which the signal is transmitted.

8. The apparatus according to claim 7, wherein
the processor (501) is configured to control the path switching switch (503) to connect the PA (502) and the ASM (505) according to the path corresponding to the strength of the transmit power determined so as to form a first path through the following manner: in a case that it is determined that the strength of the transmit power is less than or equal to a set threshold value, it is determined that the first path is the path corresponding to the strength of the transmit power, and the path switching switch (503) is controlled to connect the PA (502) and the ASM (505), so as to form the first path.

9. The apparatus according to claim 7, wherein
the processor (501) is configured to control the path switching switch (503) to connect the PA (502) and the filter (504) according to the path corresponding to the strength of the transmit power determined through the following manner: in a case that it is determined that the strength of the transmit power is greater than a set threshold value, it is determined that the second path is the path corresponding to the strength of the transmit power, and the path switching switch (503) is controlled to connect the PA (502) and the filter (504).

10. An apparatus for transmitting a signal, comprising a processor and a memory which is configured to store computer programs that can be run on the processor, wherein the processor is configured to, when running the computer programs, implement the method according to any one of claims 1 to 6.

11. A computer-readable storage medium, which stores computer programs, wherein the computer programs, when executed by a processor, implement the method according to any one of claims 1 to 6.
